Europäisches Patentamt

European Patent Office

Office européen des brevets

(11) Publication number: **0 166 782 B1**

# EUROPEAN PATENT SPECIFICATION

(45) Date of publication of patent specification: **06.05.92**

(51) Int. Cl.⁵: **G01N 29/00**, G01N 29/04, A61B 8/00

(21) Application number: **85900180.2**

(22) Date of filing: **12.12.84**

(86) International application number: **PCT/JP84/00584**

(87) International publication number: **WO 85/02682 (20.06.85 85/14)**

(54) **APPARATUS FOR MEASURING ULTRASONIC CHARACTERISTIC VALUES OF A MEDIUM.**

(30) Priority: **14.12.83 JP 235852/83**

(43) Date of publication of application:
**08.01.86 Bulletin 86/02**

(45) Publication of the grant of the patent:
**06.05.92 Bulletin 92/19**

(84) Designated Contracting States:
**DE FR GB NL SE**

(56) References cited:
**EP-A- 0 076 168       EP-A- 0 107 172
JP-A- 57 550          JP-A- 5 757 573
JP-A- 5 877 226       JP-A- 5 919 852
JP-A-58 170 212       US-A- 4 197 750
US-A- 4 470 303**

**IEEE TRANSACTIONS ON SONICS AND ULTRASONICS, vol. SU-30, no. 1, January 1983, pages 26-36, New York, US; M. O'DONNELL: "Ouantitative volume backscatter imaging"**

(73) Proprietor: **FUJITSU LIMITED**
1015, Kamikodanaka Nakahara-ku
Kawasaki-shi Kanagawa 211(JP)

(72) Inventor: **MIWA, Hirohide**
6-7-10, Miyazaki Miyamae-ku
Kawasaki-shi Kanagawa 213(JP)
Inventor: **MURAKAMI, Keiichi**
17-305, 2-8-6, Teraodai Tama-ku
Kawasakai-shi Kanagawa 214(JP)
Inventor: **SHIMURA, Takaki**
4-29-44, Tsurukawa Machida-shi
Tokyo 194-01(JP)
Inventor: **IGARASHI, Yutaka**
2-37-39, Nagatsuda Midori-ku
Yokohama-shi Kanagawa 227(JP)
Inventor: **SHIBA, Akira**
2-7-5, Chiyogaoka Aso-ku Kawasaki-shi
Kanagawa 215(JP)
Inventor: **HAYASHI, Hajime**
8-7-21, Tsukimino Yamato-shi
Kanagawa 242(JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

(74) Representative: **Muir, Ian R. et al**
**HASELTINE LAKE & CO. Hazlitt House 28**
**Southampton Buildings Chancery Lane**
**London WC2A 1AT(GB)**

## Description

TECHNICAL FIELD

The present invention relates to an apparatus for quantitatively measuring characteristic values of a medium by sending an ultrasonic wave pulse beam into the medium, such as a human body, etc., receiving pulse waves as sequentially reflected from respective depths in the medium and by processing the resultant received signal, and particularly to apparatus having a signal processing system where an error resulting from the fact that the degree of convergence (divergence) of the ultrasonic beam changes non-uniformly as a function of depth in the medium can be corrected on a realtime basis in the time region without obtaining spectrum shape by FFT, etc.

BACKGROUND ART

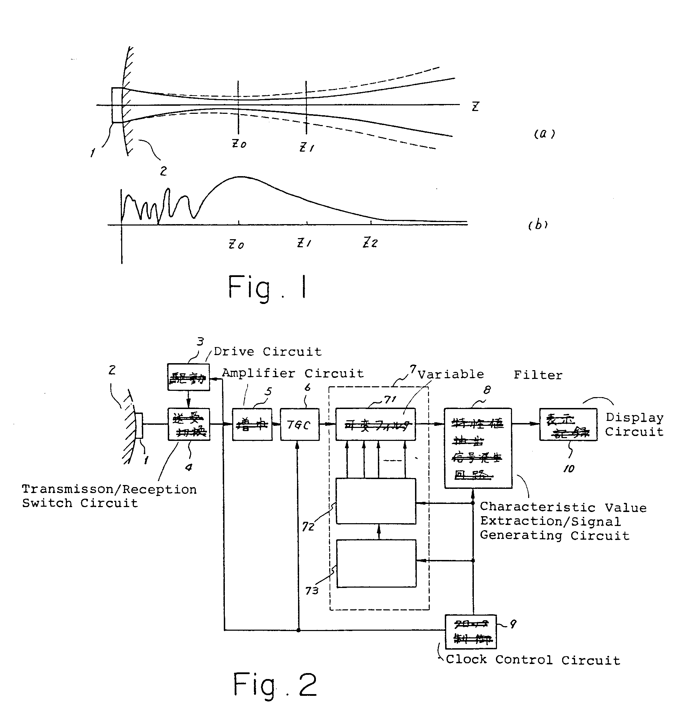

First, changes in convergence of an ultrasonic beam in dependence upon depth in a medium will be explained. In Fig. 1(a), 1 denotes an ultrasonic wave transducer consisting of a piezoelectric element such as PZT, etc., and 2 is a medium such as a human body. A primary ultrasonic pulse sent from the transducer 1 travels in the depth direction (z-axis direction in the Figure) of the medium, generates secondary waves as a result of reflections from the medium at respective depths and finally disappears in transmission. The reflected waves from respective depths travel in the direction opposite to the direction of travel of the primary pulse and are received again by the transducer 1 . A wave reflected from a shallow depth in the medium (reflected at a small value of z) reaches the transducer 1 quickly, but a wave reflected from deep in the medium (at a large value of z) reaches the transducer with a delay. Therefore, the resultant received signal has a continuous waveform. Characteristic values, such as ultrasonic wave attenuation coefficient, etc., of the medium, for example a living body tissue, can be obtained by processing such received signal wave. It is obvious that attenuation coefficient is proportional to frequency in living body tissue, etc., and the proportional coefficient is called the slope of attenuation coefficient and therefore it is often used as a characteristic value of a medium.

When primary ultrasonic pulses used are reflected from different depths into the same medium as explained above, the shape of the spectrum and the intensity of the wave must always be constant, irrespective of the depth, in order to check the frequency characteristics of the medium, if there is no attenuation in the transmission function of the medium and it does not depend on frequency.

In reality, however, the shape of an ultrasonic beam formed depending on the sending and receiving sensitivity of ultrasonic pulse is not constant as a function of depth regarding some frequency components and for one frequency component changes as shown in Fig. 1(a). Moreover, sound pressure on the centre axis is distributed as shown in Fig. 1(b). Said beam is also formed as indicated by broken lines in Fig. 1(a) for another frequency component and therefore sound pressure on the centre axis is distributed differently from the distribution shown in Fig. 1(b). This is because the degree of convergence (namely, degree of divergence) of the beam changes geometrically in three dimensions. If this effect is neglected, a large error is introduced into the distribution in the depth direction of measured characteristic values of the medium.

With a view to correcting such error, the inventors have proposed the following system (*1: Miwa et al., Japanese Laid Open Patent No. 58-55850).

Namely, a reference medium, such as water, which exhibits attenuation to such a small degree that it can be neglected, is used. It is desirable that acoustic impedance of and sound velocity in the reference medium are as similar as possible to acoustic impedance of and sound velocity in a medium to be measured but if there are differences, this can be corrected. An ultrasonic pulse is transmitted from the same transducer as will be used for measurement, and a reference reflector (a solid flat plate or ball having a smooth or rough surface) is placed in various depths z (distance between the transducer and the reflector along the beam line of the transducer is taken to be z), and the respective reflected waves are received and spectrums $Sz(f)$ are also obtained. f represents frequency. As a reference depth, a depth $z_0$, for example, near the focus shown in Fig 1, is used and the spectrum of reflected waves from the depth $z_0$ is considered as $Sz_0(f)$. In the spectrum region, $|Sz(f)|^2$ is standardised by $|Sz_0(f)|^2$. A value $Gz(f)$ obtained by such standardisation is called a geometrical factor (G factor) as indicated below.

$$Gz(f) = |Sz(f)|^2/|Sz_0(f)|^2 \qquad (1)$$

Here, $|S'z(f)|^2$ is defined as a power spectrum as indicated by the equation (2).

$$|S'z(f)|^2 = |Sz(f)|^2/Gz(f) \qquad (2)$$

In this case, $S'z(f)$ has the same shape of spectrum and intensity, namely $Sz_0(f)$, for every depth. Error due to the geometrical factor can be corrected by measuring and processing characteristics values of the medium through investigation of how $S'z(f)$ changes in accordance with the medium to be measured.

A concept similar to that of reference *1 is also introduced into a later proposal (*2: Miwa, Japanese Patent Application No. 57-57573) with the relationship indicated by equation (3) below used in place of equation (1), focusing attention on power.

$$Gz = \frac{\int |Sz(f)|^2 df}{\int |Sz_0(f)|^2 df} \qquad \ldots\ldots\ldots\ldots\ldots\ldots (3)$$

Thereafter, this concept was applied in other proposals (*3: Miwa, Japanese Patent Application No. 57-129902; Miwa et al., *4: U.S. Patent Application No. 477935, 1983) and was also announced as the concept of diffraction effect and correction thereof in the following three references in the Eighth International Symposium on Ultrasonic Imaging and Tissue Characterization, 5-8 June 1983; Ultrasonic Imaging 5, pages 186-187, in June 1983.

*5:    (D. W. Pettibone et at. Diffraction effects on the measured spectrum of a focused acoustic transducer);

*6:    (Cloostermans, J. M. Thijsen et al. IN VITRO absolute attenuation measurement with diffraction correction);

*7:    (M. Fink et al. Influence of diffraction effects on the estimation of the tissue attenuation by spectral analysis of A-lines).

However, the references *3, *4, *5, *6 and *7 all describe signal processing in frequency regions and correction of diffraction effects in such frequency regions. The reference *7 reports a simplified approximating method wherein a centre frequency is obtained accurately from the centre frequency of a spectrum divided by $Gz(f)$ in order to correct the centre frequency obtained from a power spectrum, but here water is used as a no-attenuation medium, deviation of the centre frequency of the spectrum $Sz(f)$ of the signals reflected from respective depths from the centre frequency of spectrum $Sz_0(f)$ of the reference depth $z_0$ is obtained and such deviation is added to the centre frequency at respective depths obtained in the medium to be measured, for effecting correction. This method is equivalent to approximation of multiplication with addition and an error inevitably increases.

In the reference *2, the band width of a wideband pulse is divided into n-domains (n > 3) or to n-frequency components, consideration is given to the geometrical factor in relation to power, on which attention is focused, but spectrum shape (in case n is sufficiently large) is not used positively. In case of positive use for a sufficiently large n, conversion to frequency region by FFT, etc., is also necessary. This is an intermediate method between a frequency region method and a time region method described later.

In case n is large in the reference *3, *7 and *2, the geometrical factor (G factor) or diffraction effect is corrected in the frequency domain at the time of signal processing on the frequency region, and this inevitably means that the waveform on the time axis is extracted in respect of a time window (window width T) around a certain point (t = 2z/C corresponding to the depth z at the sound velocity C), such waveform is converted to frequency region data through Fourier transformation and correction of G factor and signal processing for extracting attenuation coefficient slope must be carried out. Therefore, disadvantages arise in that a finite processing time is required even when a FFT (Fast Fourier Transform) circuit and other circuits are used and the received signal is not suited to realtime processing. Moreover, the FFT and other circuits are complicated and become large in size and expensive.

The inventors of the present invention have proposed a signal processing system where characteristics values of a medium are extracted from a receiving signal in the time region without converting it to the frequency region (*2, *8 and *9).

In a reference *8: (Miwa et al., Japanese Laid Open Patent No. 57-550) signal processing is carried out in the time region focusing on the power of receiving reflected waves and also attenuation slope of a medium is obtained in a case in which reflectivity does not have a frequency characteristic. In the frequency region, power is the 0th order moment of a power spectrum, and it is naturally influenced by the G factor. However, this factor is not considered.

Reference *2 is capable of executing signal processing only in the time region in a case in which n is 3. Although correction by G factor is also considered, the G factor takes a form as indicated by equation (3) rather than equation (1) since attention is directed only to power, as in the case of reference *8. As explained above, it is sufficient, having regard to the field of application of the references *2 and *8, to provide correction only as an integral value for the band width as a whole but an error due to so-called spectrum scalloping cannot be corrected in the references *2 and *8.

A reference *9 has probability of correcting scalloping error as the time region system.

The reference *9: (Shiba et al., Japanese Patent Application No. 58-77226) discloses that the 0th, 1st, 2nd, 3rd, ..... moments of power spectrum are obtained from the in-phase component I and quadrature component Q of a quadrature detector output and also that characteristic values of a medium are extracted from these moments, realizing simplified structure, reduction in size, economisation and real-time processing.

However, it is naturally necessary to correct for the G factor even in the case of reference *9 but such correction is not yet reported.

EP-A-0 076 168 discloses a system with the features of the pre-characterising part of claim 1, for quantitatively measuring characteristic values of a medium by sending ultrasonic waves into the medium, receiving reflected waves, arising as a result of reflections of the ultrasonic waves at different depths in the medium, the reflected waves thus being received at different times corresponding to the different depths in the medium at which reflection occurred, and processing the resultant receiving signal, derived from the received reflected waves.

The system includes a memory storing compensating signals.

The compensating signals are employed for eliminating adverse effects on the received waves arising due to frequency dependency of acoustic field shape.

A reference medium (which is homogeneous, has almost the same sound velocity as that of the medium to be measured and has no or very weak frequency dependent attenuation) and reference reflector are employed to obtain signals derived from waves reflected from respective depths in the reference medium. Such reflected wave signals are obtained from ultrasonic waves, transmitted into the reference medium, of respective different centre frequencies. The signals are filtered on the different centre frequencies, analysed and the compensating signals are generated, which are intended to compensate for relative intensity variations due to frequency characteristics of the measuring system. Compensating signals relating to each different centre frequency are stored in the memory.

When measurement is carried out in respect of a measurement medium, the gain of a filter circuit used to extract the relevant frequency component from a reflected wave is compensated by the compensating signals derived as above and read from memory, so that the filter circuit provides a compensated output. The compensated output is converted to an energy value.

Energy values are thus obtained of each of the ultrasonic waves of different centre frequencies. These energy values are stored, with time values. Medium characteristic values are obtained from the stored energy and time values.

EP-A-O 076 168 indicates that instead of two frequency bands (two centre frequencies) use may be made of a continuous full spectrum, but what is involved is not explained.

US-A-4 197 750 discloses the use and switching of filters in ultrasonic imaging apparatus.

According to the present invention there is provided apparatus for quantitatively measuring characteristic values of a medium by sending an ultrasonic pulse beam into the medium, receiving reflected waves, arising as a result of reflections of the ultrasonic pulse beam at different depths in the medium, the reflected waves thus being received at different times corresponding to the different depths in the medium at which reflection occurred, and processing the resultant receiving signal, derived from the received reflected waves, the apparatus including:

storage means storing compensating data for correcting for changes in spectrum shape and intensity of the received reflected waves, which changes result from three-dimensional changes of convergence of the ultrasonic beam at different depths in the medium, compensating data being stored in correspondence to different depths in the medium and thus in correspondence to different times of reflected wave reception,

the compensating data corresponding to different depths in the medium being obtained from the spectrum of received reflected waves arising when the ultrasonic pulse beam is sent into a reference medium, exhibiting attenuation which is so small that it can be neglected or which has no frequency dependent characteristic, and is reflected from reference reflectors placed at the respective different depths in the reference medium; and

correcting means, operable to correct the receiving signal on a real-time basis by sequentially reading out compensating data corresponding to different depths in the medium, from the storage means, and applying the sequentially read out correction information, corresponding to the different depths, to the receiving signal in sequence, said correcting means including a correcting filter to which the receiving signal is input, the frequency characteristic of the correcting filter being controlled by the compensating data sequentially read from the storage means,

characterised in that

the compensating data is either spectrum correction information for correcting said changes in spectrum shape and intensity of the received reflected waves or parameter-value correction information for correcting changes in the value of a parameter typifying the spectrum of the received reflected waves, which changes in the value of the parameter result from said changes in spectrum shape and intensity of the received reflected waves,

in that

the correcting means are operable to correct the receiving signal in the time domain, by sequentially reading out spectrum correction information or parameter value correction information,

and in that

the correcting means comprise a plurality of such correcting filters controlled in such a way that, whilst one filter is in use for filtering, the frequency characteristic of another filter is adjusted, and the filters are switched to be used sequentially for filtering the receiving signal.

It is an object of the present invention to provide a simplified, small size, high precision and economical apparatus for measuring characteristic values of a medium, which apparatus realizes high-speed correction on a real-time basis by providing a system for realizing correction in the time region and in such a form as to allow scalloping correction without converting a received signal into the frequency region when effecting G factor correction, needed as a result of three-dimensional change of ultrasonic beam focusing degree depending on the depth.

In an embodiment of the present invention a received reflection signal, as a function of time t corresponding to depth in a medium, is input to a filter which changes its frequency characteristic with time so that it has the G factor correcting coefficient corresponding to respective time (depth) and obtains a corrected time signal as the output of said filter.

## BRIEF DESCRIPTION OF THE DRAWINGS

Figs. 1(a) and 1(b) show three-dimensional changes of shape and intensity of an ultrasonic beam in a medium;

Fig. 2 is a block diagram of essential parts of an embodiment of the present invention;

Fig. 3 shows G factor frequency characteristics at different depths;

Fig. 4 shows frequency characteristics of the frequency characteristic part $U_z(f)$ of a G factor correcting term;

Figs. 5(a),(b) are block diagrams of an embodiment of the present invention utilising a convolutional integral filter.

## BEST MODE OF CARRYING OUT THE INVENTION

Fig. 2 is a block diagram of essential parts of apparatus for measuring characteristic values of an ultrasonic medium to which the present invention is applied. In addition to the circuits shown in Fig. 2, circuits for two-dimensional scanning of an ultrasonic beam and circuits for displaying a two-dimensional distribution image of characteristic values of the medium obtained by such scanning can also be provided.

2 is a medium to be measured, such as a living body. 1 is a piezoelectric transducer made of PZT, etc. 3 is a circuit for generating a voltage pulse to drive the transducer 1 in order to generate an ultrasonic pulse. Generally, an ultrasonic pulse including a centre frequency of 2 to 5 MHz is generated. 4 is a switch for transmission and reception. Switch 4 connects the transducer 1 to the drive circuit 3 during transmission of an ultrasonic pulse, and to an amplifier 5 after the transmission, thereby receiving a reflected wave from the medium. 5 is a wideband amplifier. When the sending centre frequency is set at 3 MHz, for example, the band width of a received pulse generally ranges from 2 to 4 MHz. Amplifier 5 covers such band width of 2 to 4 MHz with sufficient margin. 6 is a wide band amplifier which controls amplification degree with time and is called a TGC (Time-Gain-Control) circuit or STC (Sensitivity-Time-Control) circuit, for example. A signal reflected from a deeper area of the medium is more attenuated as it travels its propagation path and the strength of the received signal is reduced. Therefore, this amplifier 6 has the lowest gain immediately after a signal pulse has been transmitted and thereafter has a gradually increasing gain with time. The degree of increase of the gain can be controlled manually or automatically and thereby an output of

6

amplifier 6 is always maintained at an optimum level for subsequent correcting filter processing in a correcting filter 7. This amplifier is necessary for optimising S/N ratio in a case where a sufficient dynamic range (which is a ratio of maximum input signal of correcting filter 7 to noise signal) cannot be obtained and the amplifier 6 must always be provided in a stage preceding the correcting filter 7. 71, 72, 73 form correcting filter 7. 8 is a signal processor (including program processing by a microcomputer, etc.) which processes a received and corrected signal and extracts characteristic values of the medium, such as attenuation coefficient slope of living body tissue. 9 is a clock controller which generates clock and timing signals for operations explained above and also controls the system as a whole. 10 is a unit such as a display or recorder to give information to operators.

It is sufficient for signal processor 8 to execute only processing as indicated in reference *9 mentioned above and characteristic values of the medium can be obtained as a function of depth on a real-time basis only in the time region without conversion to the frequency region.

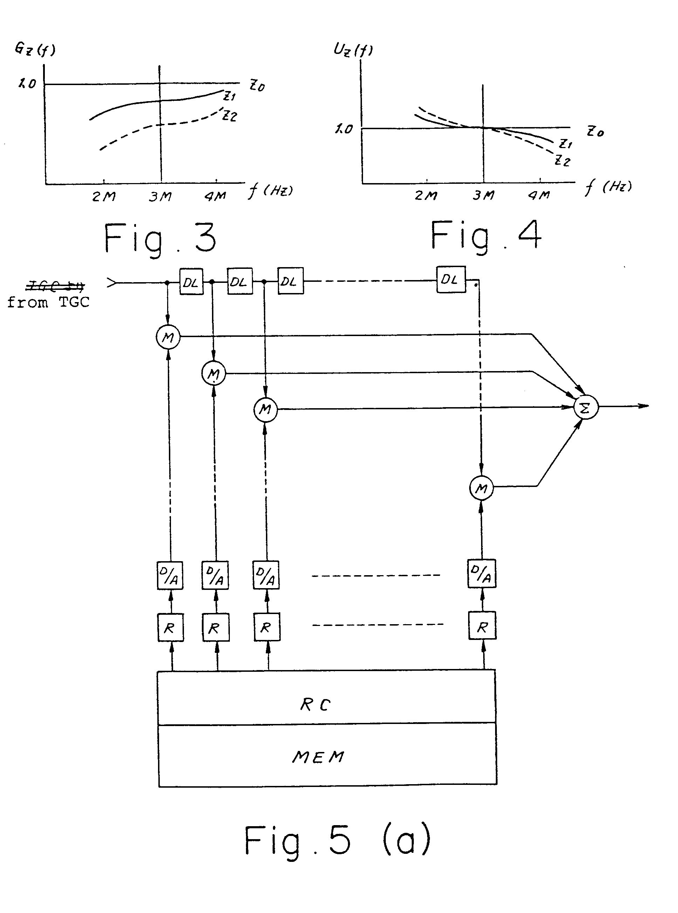

The correcting filter 7 will now be explained in detail. Fig. 3 shows the shape of the G factor $Gz(f)$. From the definition of equation (1), $Gz_0(f) = 1$. If the reference depth $z_0$ is selected at the maximum sound pressure point on the centre axis as shown in Fig. 1(b), such G factor is smaller than the absolute value of spectrum in the other deeper areas $z_1$, $z_2$ and in the shallower area $z$ ($< z_0$). Therefore, $Gz(f)$ changes the shape thereof as the function of $z$ as indicated regarding $z = z_1$, $z = z_2$. It is a matter of course that $Gz(f)$ can be defined only for the band width (for example, 2 to 4 MHz) where sufficient signal spectrum exists and it must not be obtained outside this band width because it would then be obtained from noise components.

A square root value of the inverse of $Gz(f)$ gives a spectrum correction coefficient. Here, a square root value is obtained because $Gz(f)$ is defined with respect to power. If $Gz(f)^{-1/2}$ is standardised as $Uz(f)$ with a value $a_z$ of correction coefficient at a certain frequency $f_0$, it can be expressed as follows.

$$1/[Gz(f)^{1/2}] = a_z.U_z(f) \qquad (4)$$

Where $a_z$ is a constant value defined only by the depth $z$ and is a gain having no frequency characteristic, and $Uz(f)$ represents only the frequency characteristic.

The filter 7 must have the characteristic shown by the equation (4) but it is convenient to control $a_z$ in combination with TGC 6 and leave filter 7 to deal only with frequency characteristic. In this case, since $a_z$ can be obtained previously from the measured $Gz(f)$ as a function of $z$, namely as the function of time, and can also be stored, when the gain of TGC 6 is measured as a function of time, a difference between the TGC gain and correction coefficient gain $a_z$ is a gain required for correction of attenuation and therefore it can be used as the attenuation data as required.

Hereinafter, the correcting filter 7 is assumed to execute the correction $Uz(f)$ of the frequency characteristic only. $Uz(f)$ for $z = z_0$, $z_1$, $z_2$ are shown in Fig. 4.

Here, it is supposed that variable filter 71 is realized by a circuit combining an inductance L, a capacitance C and a resistance R, which are variable with voltage or current, with fixed L, C and R. As examples of such elements, there are an unsaturated reactor which is variable with superposition of a DC voltage, a variable capacitance diode and an MOS transistor. Here, it is also supposed that such voltage control parameter elements (variable L, C, R) are used in number n.

The frequency characteristic of a filter which changes with time as shown in Fig. 4 can be realized by applying a programmed voltage, which charges with time, to n parameter control terminals.

73 is a correction coefficient - parameter conversion storage which stores n parameter voltages previously calculated for realizing $Uz(f)$ corresponding to depth, namely as a function of time, and this circuit can be realized with a microcomputer and ROM, RAM, etc., in case a voltage is digitized.

72 is a parameter read circuit which sequentially reads digital values of parameter control voltage corresponding to time from the circuit 73 in accordance with a time signal sent from the circuit 9, and generates n parameter control voltages through D/A conversion.

As explained above, the correcting filter 7 composed of the circuits 71, 72 and 73 realizes the characteristic of $Uz(f)$.

The necessity for storing the correction coefficients (or parameters) as a continuous function of time results in need for a large amount of storing capacity of the circuit 73, and increase in size and price of system. Therefore, changes of $Uz(f)$ with time can be approximated by changes in the form of a staircase. Namely, $Uz(f)$ is switched to change with fine time steps for a range of sudden changes, whilst it changes with coarse time steps for a range of gradual changes. In this case, storage capacity can be saved remarkably.

If a filter requires a longer period for switching of Uz(f) in accordance with time, a plurality of filters are provided, one filter is switched while another filter is being used and such filters can be used alternately or sequentially. In such a case, the outputs can be switched with the input used in common or the inputs can be switched with the outputs used in common.

In the above embodiment, a filter is an analog filter utilizing analog elements such as L, C, R. However, a digital filter which can be formed by A/D conversion digital processing, D/A conversion, can also be used. In the case of analog filter, it is difficult to freely design the phase on the frequency region, and an error is not generated when it is employed with the system of reference *7 where attention is directed to a moment of a power spectrum, but an error is generated in the system of reference *8 where attention is directed to phase. If a digital filter is employed in such a case, it is effective because rotation of phase in the filter can be eliminated.

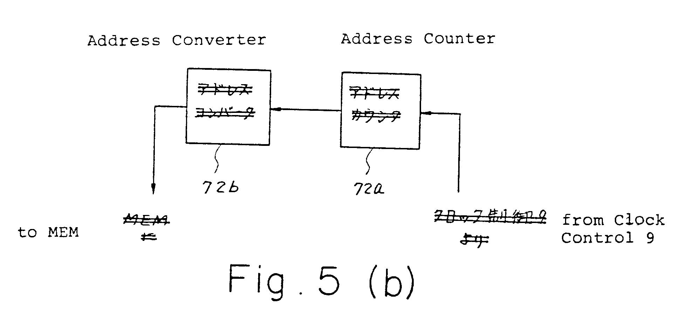

As another embodiment of the filter 7, a convolution type filter is explained with respect to Fig. 5(a). It is used to replace the correcting filter 7 consisting of the circuits 71, 72 and 73 shown in Fig. 2. DL indicates delay elements and required delay time $\delta$ may be 50 to 100 ns in a case in which the centre frequency of ultrasonic pulse is 3 MHz. M indicates analog multiplication circuits. D/A indicates digital-to-analog conversion circuits. R indicates registers. MEM is a digital memory, RC is a read controller which reads a set of correcting data from the memory MEM when required and sets the data to all registers R. RC is explained in further detail with respect to Fig. 5(b). This read controller is composed of an address counter 72a which advances by receiving clock signals from the clock controller 9 (Fig. 2) and an address converter 72b which determines the gradualness of time change of filter by receiving an output of said address counter 72a. Returning to Fig. 5(a), $\Sigma$ is an adder. Operations are explained below.

When the spectrum of a signal i(t) to be input to the filter is assumed to be I(f), an output O(t) of the filter is given by the inverse Fourier transform of a product of I(f) and Uz(f). In case the inverse Fourier transform of Uz(f) is given by uz(f) in accordance with the theory of mathematics, O(t) is given by the convolution of i(t) and uz(f).

Therefore the waveform of uz(f) for each z, namely for respective times, is stored in MEM with time steps $\delta$, corresponding to the required steps in z, and the waveform uz(t) corresponding to z is read as a group and then it is set to the registers R. The digital values set in the registers are converted to analog values, and then multiplied with input signals delayed respectively by $\delta$ (by the delay elements DL), and all multiplied outputs are added by the adder $\Sigma$. Above operations represent just the convolution of input i(t) and time waveform u(t) obtained by inverse Fourier transformation of correction coefficient Uz(f). Uz(f) has a band width of several MHz and u(t) has a waveform of about several $\mu$s extent and DL, M, D/A and R are required in a number such as several tens to a hundred. Recent LSI's available in the marketplace integrate about 128 elements including DL, M, D/A and R and thereby are reduced in size and are more economical. In this case, however, the signals cannot be input in parallel to the register group R. The signals are input in series and therefore setting time, namely the switching time of z is increased. This can be mitigated by also employing the method for sequentially switching a plurality (pairs) of filters as explained above.

When the send pulse has a Gaussian distribution spectrum $S_0(f)$ with the centre frequency $f_0$ and divergence $\sigma$, a medium to be measured is a living body tissue such as a human body, and attenuation coefficient is $\alpha(z) = \beta(z)f$ ($\beta$ is a constant of proportionality), it is known that the spectrum of the waveform reflected from a certain depth z is only deviated by an amount indicated by equation (5) at the centre frequency $f_z$ and the shape Sz(f) of spectrum is a Gaussian distribution of divergence $\sigma$.

$$f_0 - f_z = 4 \, \sigma \int_o^z \beta(z) \, dz \qquad \dots \dots \dots \dots \dots (5)$$

This equation indicates that the time corresponding to depth and the centre frequency $f_z$ are in a functional relationship. This equation is set forth for a case when correction with Uz(f) is carried out. The actual spectrum Sz(f) when correction is not carried out shows a distorted Gaussian distribution and thereby the centre frequency is further deviated by $\Delta f_z$. Such deviation can be calculated as a function of z and fz. In the system of reference *9, fz can be measured as the function of z, namely as the function of time. Therefore, when fz measured as a function of z can be obtained by previously calculating the amount of correction needed for fz and effecting the correction from a stored table. A correct distribution of $\beta(z)$ can thus be obtained.

Such a method can be adopted in any case in which the shape of the spectrum is determined when a typical parameter of the spectrum is defined. In the above example, the centre frequency $f = \int f|S(f)|^2 df / \int |S(f)|^2 \, df$ itself is used as the typical parameter, but band width or other parameter may be used also as the typical parameter. In the above example, the shape of the spectrum is not changed except for deviation of the centre frequency, but it can be understood from the following explanation that such a "typical parameter" method can be applied to a case in which there is a 1:1 relationship between the spectrum shape and the typical parameter. When this typical parameter is measured as a function of depth (measured at different depths) a corrected spectrum can be obtained from the shape of the spectrum corresponding to the typical parameter corresponding to a certain depth and G factor correcting coefficient, centre frequency and correction amounts such as moments of respective orders can be obtained from such corrected spectrum as a function of the typical parameter and moreover as the function of depth, from the relationship of the measured typical parameter to depth. Thereby, accurately corrected distribution, in the depth direction, of characteristic values of a medium (for example, attenuation coefficient slope, etc.) can be obtained from the values explained above.

This method realizes correction by correct multiplication with similar simplified processings, while multiplication is approximated to addition, for the correction of centre frequency, in reference *7. Thus, this method gives more accurate characterization of the medium.

According to the present invention, the G factor which represents spectrum distortion resulting from three dimensional non-uniformity in the degree of convergence on an ultrasonic beam can be corrected in the time region without Fourier transformation of the received signal in a way which also realizes correction of spectrum scalloping. Accordingly, a simplified, small size and economical apparatus for measuring characteristic values of a medium can be obtained for highly accurate and high-speed real time characterization.

**Claims**

1. Apparatus for quantitatively measuring characteristic values of a medium by sending an ultrasonic pulse beam into the medium, receiving reflected waves, arising as a result of reflections of the ultrasonic pulse beam at different depths (z) in the medium, the reflected waves thus being received at different times corresponding to the different depths in the medium at which reflection occurred, and processing the resultant receiving signal, derived from the received reflected waves, the apparatus including:

storage means (73; MEM) storing compensating data for correcting for changes in spectrum shape and intensity of the received reflected waves, which changes result from three-dimensional changes of convergence of the ultrasonic beam at different depths in the medium, compensating data being stored in correspondence to different depths (z) in the medium and thus in correspondence to different times of reflected wave reception,

the compensating data corresponding to different depths in the medium being obtained from the spectrum of received reflected waves arising when the ultrasonic pulse beam is sent into a reference medium, exhibiting attenuation which is so small that it can be neglected or which has no frequency dependent characteristic, and is reflected from reference reflectors placed at the respective different depths in the reference medium; and

correcting means (7, 71, 72; RC, R, D/A, M, DL, Σ), operable to correct the receiving signal on a real-time basis by sequentially reading out compensating data corresponding to different depths (z) in the medium, from the storage means (73, MEM), and applying the sequentially read out correction information, corresponding to the different depths (z), to the receiving signal in sequence, said correcting means (71, 72) including a correcting filter (71) to which the receiving signal is input, the frequency characteristic of the correcting filter (71) being controlled by the compensating data sequentially read from the storage means (73),

characterised in that

the compensating data is either spectrum correction information for correcting said changes in spectrum shape and intensity of the received reflected waves or parameter-value correction information for correcting changes in the value of a parameter typifying the spectrum of the received reflected waves, which changes in the value of the parameter result from said changes in spectrum shape and intensity of the received reflected waves,

in that

the correcting means are operable to correct the receiving signal in the time domain, by sequentially reading out spectrum correction information or parameter value correction information,

and in that

the correcting means comprise a plurality of such correcting filters (71) controlled in such a way that, whilst one filter is in use for filtering, the frequency characteristic of another filter is adjusted, and the filters are switched to be used sequentially for filtering the receiving signal.

2. Apparatus as claimed in claim 1, wherein the correcting means are connected in series with a time gain control circuit (6) operable to provide gain correction, and each correcting filter (71) provides correction in relation only to frequency characteristic.

3. Apparatus as claimed in any preceding claim, wherein each correcting filter (71) comprises analog filters comprising inductances (L), capacitances (C) and resistances (R).

4. Apparatus as claimed in claim 1, wherein each correcting filter (71) is a digital filter comprising an A/D converter, a digital processing circuit and a D/A converter.

5. Apparatus as claimed in claim 1, wherein the storage means (MEM) stores, as spectrum correction information, information representing the inverse Fourier transformation (u(t)) of the desired frequency characteristic (U(f)) which said correcting means (7) should provide, and wherein the correcting means (RC, R, D/A, M, DL, $\Sigma$) comprises a means for executing convolution of the receiving signal and the spectrum correction information.

6. Apparatus as claimed in claim 1, wherein said correcting means comprises means for carrying out addition, subtraction, multiplication or division employing parameter-value correction information read from the storage means.

7. Apparatus as claimed in claim 6, wherein said parameter typifying the spectrum of received reflected waves is average frequency or centre frequency of the spectrum, parameter-value correction information is constituted by values for correcting the average frequency or centre frequency, and the correcting means comprises an adder which adds parameter-value correction information read from the storage means to average frequency or centre frequency obtained from the receiving signal.

**Revendications**

1. Appareil pour mesurer quantitativement des valeurs caractéristiques d'un milieu, par l'émission d'un faisceau ultrasonore impulsionnel dans le milieu, la réception d'ondes réfléchies, qui résultent de réflexions du faisceau ultrasonore impulsionnel à différentes profondeurs (z) dans le milieu, les ondes réfléchies étant ainsi reçues à des instants différents qui correspondent aux différentes profondeurs dans le milieu auxquelles la réflexion a eu lieu, et le traitement du signal de réception résultant, qui est obtenu à partir des ondes réfléchies reçues, l'appareil comprenant :

des moyens de mémoire (73; MEM) qui mémorisent des données de compensation pour corriger des changements de forme spectrale et d'intensité des ondes réfléchies reçues, ces changements résultant de changements tridimensionnels de la convergence du faisceau ultrasonore à différentes profondeurs dans le milieu, des données de compensation étant enregistrées en correspondance avec différentes profondeurs (z) dans le milieu, et donc en correspondance avec différents instants de réception des ondes réfléchies,

les données de compensation correspondant à différentes profondeurs dans le milieu étant obtenues à partir du spectre d'ondes réfléchies reçues qui apparaissent lorsque le faisceau ultrasonore impulsionnel est émis dans un milieu de référence, présentant une atténuation qui est suffisamment faible pour qu'on puisse la négliger ou qui ne présente pas de caractéristique dépendant de la fréquence, et est réfléchi par des réflecteurs de référence qui sont placés aux différentes profondeurs respectives dans le milieu de référence; et

des moyens de correction (7, 71, 72; RC, R, D/A, M, DL, $\Sigma$), que l'on peut faire fonctionner de façon à corriger le signal reçu, en temps réel, en lisant séquentiellement dans les moyens de mémoire (73, MEM) des données de compensation qui correspondent à différentes profondeurs (z) dans le milieu, et en appliquant séquentiellement au signal de réception l'information de correction lue séquentiellement, qui correspond aux différentes profondeurs (z), les moyens de correction (71, 72) comprenant un filtre de correction (71) auquel le signal de réception est appliqué, la caractéristique de fréquence du filtre de correction (71) étant commandée par les données de compensation qui sont lues séquentiellement dans les moyens de mémoire (73),

caractérisé en ce que

les données de compensation sont soit une information de correction de spectre qui est destinée à corriger les changements précités de la forme spectrale et de l'intensité des ondes réfléchies reçues, soit une information de correction de valeur de paramètre, qui est destinée à corriger des changements de la valeur d'un paramètre qui caractérise le spectre des ondes réfléchies reçues, ces changements de la valeur du paramètre résultant des changements précités de la forme spectrale et de l'intensité des ondes réfléchies reçues,

en ce que

on peut faire fonctionner les moyens de correction de façon à corriger le signal de réception dans le domaine des temps, en lisant séquentiellement l'information de correction de spectre ou l'information de correction de valeur de paramètre,

et en ce que

les moyens de correction comprennent un ensemble de tels filtres de correction (71), commandés d'une manière telle que, pendant qu'un filtre est utilisé pour le filtrage, la caractéristique de fréquence d'un autre filtre est réglée, et les filtres sont commutés pour être utilisés séquentiellement pour le filtrage du signal de réception.

2. Appareil selon la revendication 1, dans lequel les moyens de correction sont connectés en série avec un circuit de commande de gain en fonction du temps (6), que l'on peut faire fonctionner pour réaliser une correction de gain, et chaque filtre de correction (71) procurant une correction qui est liée seulement à une caractéristique de fréquence.

3. Appareil selon l'une quelconque des revendications précédentes, dans lequel chaque filtre de correction (71) comprend des filtres analogiques qui comportent des inductances (L), des capacités (C) et des résistances (R).

4. Appareil selon la revendication 1, dans lequel chaque filtre de correction (71) est un filtre numérique comprenant un convertisseur A/N, un circuit de traitement numérique et un convertisseur N/A.

5. Appareil selon la revendication 1, dans lequel les moyens de mémoire (MEM) enregistrent, à titre d'information de correction de spectre, une information représentant la transformée de Fourier inverse (u(t)) de la caractéristique de fréquence désirée (U(f)) que les moyens de correction (7) doivent fournir, et dans lequel les moyens de correction (RC, R, D/A, M, DL, $\Sigma$) comprennent des moyens qui sont destinés à accomplir une convolution du signal de réception et de l'information de correction de spectre.

6. Appareil selon la revendication 1, dans lequel les moyens de correction comprennent des moyens destinés à accomplir des opérations d'addition, de soustraction, de multiplication ou de division, en employant une information de correction de valeur de paramètre qui est lue dans les moyens de mémoire.

7. Appareil selon la revendication 6, dans lequel le paramètre caractérisant le spectre des ondes réfléchies reçues est une fréquence moyenne ou une fréquence centrale du spectre, l'information de correction de valeur de paramètre est constituée par des valeurs qui sont destinées à corriger la fréquence moyenne ou la fréquence centrale, et les moyens de correction comprennent un additionneur qui additionne l'information de correction de valeur de paramètre qui est lue dans les moyens de mémoire, et la fréquence moyenne ou la fréquence centrale qui est obtenue à partir du signal de réception.

**Patentansprüche**

1. Vorrichtung zum quantitativen Messen charakteristischer Werte eines Mediums durch Senden eines Ultraschallimpulsstrahles in das Medium, Empfangen reflektierter Wellen, die als Ergebnis von Reflexionen des Ultraschallimpulsstrahles in verschiedenen Tiefen (z) in dem Medium auftreten, wobei die so reflektierten Wellen zu verschiedenen Zeiten empfangen werden, die den verschiedenen Tiefen in dem Medium entsprechen, in welchen die Reflexion aufgetreten ist, und Verarbeiten des resultierenden Empfangssignals, das von den empfangenen reflektierten Wellen abgeleitet ist, welche Vorrichtung enthält:

eine Speichereinrichtung (73; MEM) zum Speichern von Kompensationsdaten zum Korrigieren der Änderungen in der Spektralform und der Intensität der empfangenen reflektierten Wellen, welche Änderungen von dreidimensionalen Änderungen der Konvergenz des Ultraschallstrahls bei verschiedenen Tiefen in dem Medium resultieren, wobei die Kompensationsdaten in Korrespondenz mit verschiedenen Tiefen (z) in dem Medium gespeichert sind und somit in Korrespondenz mit verschiedenen Zeiten des Empfanges reflektierter Wellen,

wobei die Kompensationsdaten, die verschiedenen Tiefen in dem Medium entsprechen, von dem Spektrum der empfangenen reflektierten Wellen erzielt werden, die auftreten, wenn der Ultraschallimpulsstrahl in ein Referenzmedium gesendet wird, eine Dämpfung aufweisen, die so klein ist, daß sie vernachlässigt werden kann, oder die keine frequenzabhängige Charakteristik hat, und von Referenzreflektoren reflektiert wird, die an entsprechend verschiedenen Tiefen in dem Referenzmedium angeordnet sind; und

Korrektureinrichtungen (7, 71, 72; RC, R, D/A, M, DL, $\Sigma$), die betreibbar sind, um das Empfangssignal auf einer Echtzeitbasis durch sequentielles Auslesen von Kompensatonsdaten, die verschiedenen Tiefen (z) in dem Medium entsprechen, von der Speichereinrichtung (73, MEM) zu korrigieren, und um die sequentiell ausgelesene Korrekturinformation, die verschiedenen Tiefen (z) entspricht, in Folge auf das Empfangssignal anzuwenden, wobei die Korrektureinrichtung (71, 72) ein Korrekturfilter (71) enthält, welchem das Empfangssignal eingegeben wird, und die Frequenzcharakteristik des entsprechenden Korrekturfilters (71) durch die Kompensationsdaten gesteuert wird, die sequentiell von der Speichereinrichtung (73) gelesen werden,

dadurch gekennzeichnet, daß

die Kompensationsdaten entweder Spektrumkorrekturinformation zum Korrigieren der genannten Änderungen in der Spektralform und der Intensität der empfangenen reflektierten Wellen sind, oder Parameterwertkorrekturinformation zum Korrigieren von Änderungen des Wertes eines Parameters, der das Spektrum der empfangenen reflektierten Wellen typifiziert, welche Änderungen in dem Wert des Parameters aus den Änderungen in der Spektralform und der Intensität der empfangenen reflektierten Wellen resultieren,

und daß

die Korrektureinrichtung betreibbar ist, um das Empfangssignal in der Zeitdomäne zu korrigieren, durch sequentielles Auslesen von Spektrumkorrekturinformation oder Parameterwertkorrekturinformation,

und daß

die Korrektureinrichtung eine Vielzahl von solchen Korrekturfiltern (71) umfaßt, die in solch einer Weise gesteuert werden, daß, während ein Filter zum Filtern in Betrieb ist, die Frequenzcharakteristik eines anderen Filters eingestellt wird, und die Filter geschaltet werden, um sequentiell zum Filtern des Empfangssignals verwendet zu werden.

2.  Vorrichtung nach Anspruch 1, bei der die Korrektureinrichtung in Reihe mit einer zeitverstärkten Steuerschaltung (6) verbunden ist, die betreibbar ist, um eine Verstärkungskorrektur zu liefern, und jedes Korrekturfilter (71) eine Korrektur in Bezug auf lediglich die Frequenzcharakteristik liefert.

3.  Vorrichtung nach einem der vorhergehenden Ansprüche, bei der das Korrekturfilter (71) Analogfilter umfaßt, die Induktanzen (L), Kapazitäten (C) und Widerstände (R) umfassen.

4.  Vorrichtung nach Anspruch 1, bei der jedes Korrekturfilter (71) ein digitales Filter ist, welches einen A/D-Konverter, eine digitale Verarbeitungsschaltung und einen D/A-Konverter umfaßt.

5.  Vorrichtung nach Anspruch 1, bei der die Speichereinrichtung (MEM) als Spektrumkorrekturinformation speichert: Information, die die inverse Fourier-Transformation (u(t)) der gewünschten Frequenzcharakteristik (U(f)) darstellt, welche die Korrektureinrichtung (7) liefern sollte, und bei der die Korrektureinrichtung (RC, R, D/A, M, DL, $\Sigma$) eine Einrichtung zum Ausführen einer Konvolution des Empfangssignals und der Spektrumkorrekturinformation umfaßt.

6.  Vorrichtung nach Anspruch 1, bei der die Korrektureinrichtung Einrichtungen zum Durchführen von Addition, Subtraktion, Multiplikation oder Division umfaßt, die Parameterwertkorrekturinformation verwendet, die von der Speichereinrichtung ausgelesen wird.

**7.** Vorrichtung nach Anspruch 6, bei der die Parametertypifizierung das Spektrum von empfangenen reflektierten Wellen eine Durchschnittsfrequenz oder Zentralfrequenz des Spektrums ist, die Parameterwertkorrekturinformation durch Werte zum Korrigieren der Durchschnittsfrequenz oder der Zentralfrequenz gebildet ist, und die Korrektureinrichtung einen Addierer umfaßt, der Parameterwertkorrekturinformation, die von der Speichereinrichtung ausgelesen wird, zu der Durchschnittsfrequenz oder Zentralfrequenz addiert, die von dem Empfangssignal erhalten wird.

Fig. 1

Fig. 2

Fig.3

Fig.4

Fig.5 (a)

Address Converter          Address Counter

アドレス                    アドレス
コンバータ                  カウンタ

72b                        72a

to MEM    MEM              アドゥ制御部9    from Clock
          き               より             Control 9

# Fig. 5 (b)